# FASCICULE DE BREVET EUROPEEN

(11) **EP 0 400 689 B1**
(45) Date de publication et mention de la délivrance du brevet: **12.06.1996**
(21) Numéro de dépôt: 90113741.4
(22) Date de dépôt: 25.04.1985
(51) Int. Cl.: F16L 59/04

(54) **Conduite calorifugée pour le transport de fluides**
Thermisch isoliertes Rohr für den Transport von Flüssigkeiten
Thermally insulated pipe for conveying fluids

(30) Priorité: 25.04.1984 FR 8406483
(43) Date de publication de la demande: 05.12.1990
(62) Demande divisionnaire de: 85400810.9
(73) Titulaire: COFLEXIP, F-75116 Paris (FR); INSTITUT FRANCAIS DU PETROLE, F-92502 Rueil-Malmaison (FR)
(72) Inventeur: Dridi, Hamadi, F-75013 Paris (FR); Dewimille, Bernard, F-91350 Grigny (FR)
(74) Mandataire: Leszczynski, André

(56) Documents cités:
- FR-A- 353 450
- FR-A- 1 327 676
- GB-A- 1 330 861
- US-A- 2 857 931
- US-A- 3 685 546
- US-A- 3 687 765

## Description

La présente invention est relative à un élément d'isolation thermique dans une conduite calorifugée pour le transport de fluides, utilisable en particulier mais non exclusivement pour le transport d'hydrocarbures produits par des puits sous-marins.

Le problème du calorifugeage des conduites sous-marines de production se pose en particulier pour l'exploitation de gisements d'huiles lourdes qui risquent de figer lors de leur transport entre le puits et la plate-forme par suite de pertes thermiques dans la conduite entourée d'eau de mer, le calorifugeage étant également nécessaire pour éviter la formation d'hydrates auxquels sont sujets certains pétroles bruts pendant leur refroidissement.

Il a déjà été proposé de réaliser des conduites calorifugées comportant un tube ou noyau central, essentiellement rigide, dont la paroi extérieure est entourée concentriquement d'une gaine tubulaire, elle-même rigide, et dans lesquelles une matière d'isolation, telle qu'une mousse de polyuréthane, est injectée dans l'espace annulaire formé autour de la surface extérieure du noyau. Cette injection de mousse peut être effectuée soit à terre soit sur barge. Il s'est avéré dans la pratique que de telles injections de mousse étaient difficiles à réaliser sur barge avant la pose de la conduite et, lorsqu'elles sont réalisées à terre, des problèmes importants se posent en ce qui concerne la manutention de la conduite rigide réalisée. Un autre inconvénient important des conduites réalisées jusqu'à présent est leur faible résistance à l'écrasement, ne dépassant généralement pas 5 bars, ce qui leur confère une tenue insuffisante aux contraintes extérieures, et en particulier la pression hydrostatique qui dans les conditions modernes d'exploitation peut être supérieure à 20 bars.

La présente invention se propose de réaliser dans une conduite calorifugée comportant autour d'un tube ou noyau flexible une structure d'isolation thermique offrant en particulier une bonne résistance aux contraintes extérieures, en particulier vis-à-vis de l'écrasement, ayant un faible coefficient de conductibilité thermique, pouvant conserver ses propriétés physiques en présence d'eau de mer et ayant une absorption d'eau très faible, même sous pression et à des températures relativement élevées, notamment de l'ordre de 60° à 100°C.

Dans la présente demande le terme "flexible" s'entend pour désigner toute structure, le cas échéant rigide, apte à être enroulée sans dommage sur des tourets d'un diamètre ne dépassant pas 10 m.

L'invention est plus particulièrement applicable avec des tubes ou noyaux flexibles comportant une gaine interne d'étanchéité, des armures de renforcement et un revêtement extérieur de protection, ces tubes pouvant également comporter une carcasse métallique de résistance à l'écrasement. De tels tubes sont fabriqués et commercialisés en grandes longueurs et en différents diamètres par la Société Coflexip.

La présente invention a pour objet un élément d'isolation thermique tel que défini dans la revendication 1.

Selon l'invention, le matériau d'isolation est mis en place par spiralage, autour du noyau, d'un profilé en forme de bande que l'on enroule selon un pas déterminé et en un nombre de couches approprié correspondant au diamètre des cloisons annulaires.

Pour le spiralage, on peut utiliser un profilé sous forme de bande par exemple en PVC, PVCC, PC, expansé obtenu soit par extrusion, soit par raboutage de bandes découpées dans des plaques moulées que l'on applique sur le noyau interne par déformation. on confère à de tels profilés sous forme de bande par exemple une largeur de l'ordre de 0,5 à 10 cm et une épaisseur de l'ordre de 5 à 30 mm, la valeur de la déformation plastique variant selon l'épaisseur du profilé et le diamètre du noyau entre 2 et 10 %. De tels profilés possèdent une grande résistance à la traction permettant leur spiralage par machine tournante, à partir de bobines où les profilés sont stockés en très grande longueur. Le raboutage s'effectue par collage.

Le spiralage s'effectue selon l'invention avec un certain jeu qui confère à la structure de conduite une grande flexibilité compatible, le cas échéant, avec celle du tube ou noyau interne.

On peut réaliser ainsi selon l'invention notamment des conduites flexibles calorifugées en grande longueur.

D'autres avantages et caractéristiques de l'invention apparaîtront dans la description suivante d'exemples particuliers de réalisation donnés à titre nullement limitatif et se référant au dessin annexé dans lequel :
- la figure 1 est une vue très fragmentaire et schématique d'un tronçon de conduite selon un mode de réalisation de l'invention,
- les figures 2 à 5 illustrent différentes phases de réalisation d'une conduite selon l'invention.

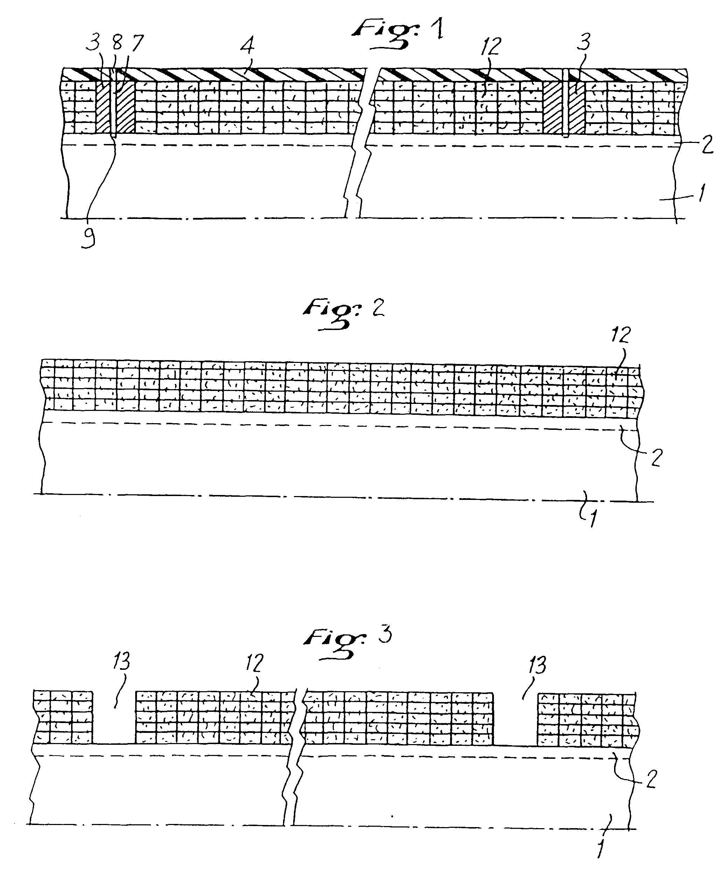

On se réfère tout d'abord à la figure 1.

La conduite illustrée sur cette figure comporte un tube ou noyau interne 1 muni d'un revêtement extérieur de protection 2 réalisé en un matériau souple tel qu'un polyamide ou du polyéthylène.

Autour du noyau 1 sont mises en place sur le revêtement extérieur 2 du noyau une pluralité de cloisons annulaires en forme de disques 3. Ces cloisons 3 en forme de disques sont dans un mode particulier de réalisation en polyuréthane d'une dureté comprise entre 70 et 90 shore A et sont placées sur le noyau avec des espacements déterminés, par exemple de l'ordre de 2 mètres dans le présent exemple.

La conduite selon l'invention comporte une gaine extérieure extrudée en continu 4 et solidarisée des surfaces périphériques des cloisons 3.

Dans les espaces annulaires ménagés entre la face extérieure du revêtement 2, la gaine extérieure 4 et les différentes cloisons 3, est mis en place selon l'invention un matériau d'isolation 12.

Dans le mode de réalisation de la figure 1, il est prévu dans les cloisons 3 des évidements radiaux 7 débouchant dans des orifices 8 de la gaine externe 4 d'un côté et l'autre côté dans une rainure périphérique 9 ménagée dans le revêtement extérieur 2 du noyau. Ces évidements 7 ont pour fonction essentielle d'assurer des chemins préférentiels pour le passage de gaz contenu dans la conduite évitant à celui-ci, en cas de surpression, de diffuser à travers le matériau d'isolation 12.

On doit bien comprendre que ces évidements 7 ne constituent qu'une caractéristique optionnelle.

Le matériau d'isolation désigné par 12 est mis en place par spiralage de bandes ou de profilés tels que décrits précédemment enroulés sur le noyau par déformation plastique.

De tels profilés, actuellement connus en courtes longueurs, présentent une résistance à un écrasement de 10 % de l'ordre de 40 à 100 bars, une faible conductibilité thermique, une densité généralement comprise entre 0,25 et 0,6 grammes par cm3, un bon comportement au fluage et une absorption d'eau très faible ou nulle.

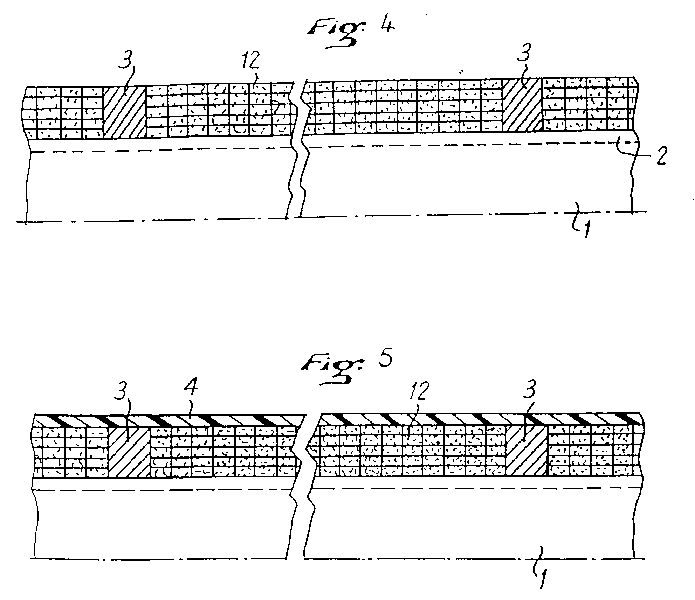

La réalisation d'une conduite selon la figure 1 sera décrite plus en détail ci-dessous en référence aux figures 2 à 5.

Comme illustré à la figure 2 on met tout d'abord en place par spiralage autour du revêtement extérieur 2 d'un noyau 1 le matériau d'isolation 12, sur toute la longueur du noyau. Dans un exemple particulier de réalisation pour un noyau d'un diamètre de 240 mm on réalise une isolation d'une épaisseur de 40 mm.

La phase suivante consiste à découper, comme illustré à la figure 3, à des intervalles appropriés des anneaux 13 dans l'isolation 12 réalisée. Dans l'exemple de réalisation on découpe ainsi des anneaux d'une épaisseur de 150 mm répartis tous les 100 mètres.

On réalise ensuite une étanchéité des parois découpées de l'isolation 12 au niveau des anneaux 13 à l'aide d'un mastic approprié.

Le cas échéant lorsque la cloison à mettre en place doit présenter un évidement pour le dégazement on réalise au fond de chaque anneau 13 une rainure dans le revêtement 2 du noyau.

A l'aide d'un solvant approprié on nettoie la surface externe du revêtement 2 du noyau et on applique sur cette surface un primaire approprié. On procède ensuite au moulage des cloisons annulaires 3. Après le moulage de chaque cloison réalisé par positionnement d'un moule approprié, on nettoie la surface extérieure de l'ensemble constitué par le noyau muni de l'isolation et les cloisons à l'aide d'un solvant approprié, essentiellement pour enlever l'agent de démoulage. On applique ensuite une colle thermofusible sur la périphérie de l'ensemble et l'on extrude une gaine externe, de préférence en polyamide ou polyéthylène, à une température élevée, de l'ordre de 180°C faisant fondre la colle thermofusible assurant l'adhérence de la gaine avec les cloisons.

## Revendications

1. Elément d'isolation thermique (12) dans une conduite flexible calorifugée pour le transport de fluides comprenant un tube ou noyau central (1) et une gaine externe (4) concentrique audit noyau, ledit élément d'isolation thermique (12) remplissant l'espace annulaire étanche délimité entre ledit noyau, ladite gaine externe et des cloisons annulaires étanches (3), caractérisé par le fait qu'il comprend au moins une couche d'une bande d'isolation thermique spiralée avec un pas régulier et à jeu autour du noyau (1) en étant enroulée sur toute la longueur de la conduite par déformation plastique dont la valeur est comprise entre 2 et 10 %, ladite bande étant constituée d'une matière plastique expansée possédant une densité comprise entre 0,25 et 0,6 g/cm3, une faible conductibilité thermique, une bonne résistance au fluage, une absorption d'eau très faible et pouvant conserver ses propriétés physiques en présence d'eau de mer.

2. Elément d'isolation thermique selon la revendication 1, caractérisé par le fait que ladite matière plastique expansée est du PVC ou du PVCC expansé.

3. Elément d'isolation thermique selon l'une quelconque des revendications 1 et 2, caractérisé par le fait que ladite matière plastique expansée possède une résistance à un écrasement de 10 % pour une pression de l'ordre de 40 à 100 bars.

4. Elément d'isolation thermique selon l'une quelconque des revendications précédentes, caractérisé par le fait que ladite matière plastique expansée est apte à conserver ses propriétés physiques à des températures comprises entre 60°C et 100°C.

5. Elément d'isolation thermique selon l'une quelconque des revendications précédentes, caractérisé par le fait que ladite bande a une largeur comprise entre 0,5 et 10cm.

6. Elément d'isolation thermique selon l'une quelconque des revendications précédentes, caractérisé par le fait que ladite bande de matière plastique expansée est formée de grandes longueurs produites par extrusion.

7. Elément d'isolation thermique selon l'une quelconque des revendications précédentes, caractérisé par le fait que ladite bande isolante est enroulée autour d'un revêtement tubulaire continu (2) autour du noyau (1).

## Patentansprüche

1. Wärmeisolationselement (12) in einer flexiblen, wärmeisolierten Leitung für den Transport von Flüssigkeiten, mit einem zentralen Rohr oder Kern (1) und einem zu diesem Kern konzentrischen Außenmantel (4), wobei das genannte Wärmeisolationselement (12) den ringförmigen Raum ausfüllt, der zwischen dem genannten Kern, dem genannten Außenmantel und ringförmigen, dichten Zwischenwänden dicht abgeteilt ist, **dadurch gekennzeichnet**, daß es mindestens eine Lage aus einem Wärmeisolierband aufweist, das spiralförmig mit regelmäßiger Ganghöhe und mit Spiel um den Kern (1) gewickelt ist, wobei es auf die gesamte Länge der Leitung durch plastische Verformung, deren Wert zwischen 2 und 10 % liegt, aufgewickelt ist, und wobei das genannte Band aus einem expandierten Kunststoff mit einer Dichte zwischen 0,25 und 0,6 g/cm³, einer schwachen Wärmeleitfähigkeit und guter Fließbeständigkeit und sehr schwacher Wasserabsorption besteht, der seine physikalischen Eigenschaften in der Anwesenheit von Meerwasser beibehalten kann.

2. Wärmeisolationselement nach Anspruch 1, **dadurch gekennzeichnet**, daß der expandierte Kunststoff expandiertes PVC oder PVCC ist.

3. Wärmeisolationselement nach einem der Ansprüche 1 oder 2, **dadurch gekennzeichnet**, daß der expandierte Kunststoff Widerstandsfähigkeit gegen Eindrücken von 10 % bei einem Druck in der Größenordnung von 40 bis 100 bar aufweist.

4. Wärmeisolationselement nach einem der vorstehenden Ansprüche, **dadurch gekennzeichnet**, daß der expandierte Kunststoff seine physikalischen Eigenschaften bei Temperaturen zwischen 60°C und 100°C beibehalten kann.

5. Wärmeisolationselement nach einem der vorstehenden Ansprüche, **dadurch gekennzeichnet**, daß das genannte Band eine Breite von 0,5 bis 10 cm aufweist.

6. Wärmeisolationselement nach einem der vorstehenden Ansprüche, **dadurch gekennzeichnet**, daß das genannte Band aus expandiertem Kunststoff mit großen Längen, hergestellt durch Extrusion, ausgebildet ist.

7. Wärmeisolationselement nach einem der vorstehenden Ansprüche, **dadurch gekennzeichnet,** daß das genannte Isolierband um eine um den Kern (1) herum angeordnete rohrförmige, durchgehende Verkleidung (2) herumgewickelt ist.

## Claims

1. A thermal insulating element (12) in a flexible heat insulated pipe for the conveyance of fluids, comprising a central tube or core (1) and an outer sheath (4) that is concentric with the said core, the said thermal insulating element (12) filling the annular leakproof space delimited between the said core, the said outer sheath and leakproof annular partitions (3), characterized in that it comprises at least one layer of a thermal insulating band helically wound with a regular pitch and with clearance round the core (1) and being wound over the whole length of the pipe by plastic deformation, the value whereof is comprised between 2 and 10%, the said band being constituted by an expanded plastic material having a density comprised between 0.25 and 0.6 g/cm³, low thermal conductivity, good resistance to plastic flow, a very low absorption of water and being capable of preserving its physical properties in the presence of seawater.

2. A thermal insulating element according to claim 1, characterized in that the said expanded plastic material is PVC or expanded PVCC.

3. A thermal insulating element according to any one of claims 1 and 2, characterized in that the said expanded plastic material has a crushing strength of 10% for a pressure of the order of 40 to 100 bar.

4. A thermal insulating element according to any one of the preceding claims, characterized in that the said expanded plastic material is capable of retaining its physical properties at temperatures comprised between 60°C and 100°C.

5. A thermal insulating element according to any one of the preceding claims, characterized in that the said band has a width comprised between 0.5 and 10 cm.

6. A thermal insulating element according to any one of the preceding claims, characterized in that the said band of the expanded plastic material is formed from long lengths produced by extrusion.

7. A thermal insulating element according to any one of the preceding claims, characterized in that the said insulating band is wound round a continuous tubular covering (2) round the core (1).
